# FASCICULE DE BREVET EUROPEEN

(11) **EP 3 988 419 B1**
(45) Date de publication et mention de la délivrance du brevet: **13.09.2023**
(21) Numéro de dépôt: 21203788.1
(22) Date de dépôt: 20.10.2021
(51) Int. Cl.: B61D 29/00

(54) **DISPOSITIF DE GESTION DE LA LUMIÈRE POUR VÉHICULE, VÉHICULE ET PROCÉDÉ ASSOCIÉS**
VORRICHTUNG ZUR LICHTSTEUERUNG FÜR FAHRZEUG, ENTSPRECHENDES FAHRZEUG UND VERFAHREN
DEVICE FOR MANAGING THE LIGHT FOR A VEHICLE, ASSOCIATED VEHICLE AND METHOD

(30) Priorité: 21.10.2020 FR 2010778
(43) Date de publication de la demande: 27.04.2022
(73) Titulaire: ALSTOM Transport Technologies, 93400 Saint-Ouen (FR)
(72) Inventeur: CHIADINI, Luca, 59273 FRETIN (FR); FAUROIS, Damien, 59650 VILLENEUVE D'ASCQ (FR); SCARAMUZZINO, Jean-Pierre, 59870 WARLAING (FR); DE-COLOMBEL, Bertrand, 75020 PARIS (FR); ETHIRAJALU, Gopi, 59300 AULNOY-LEZ-VALENCIENNES (FR)
(74) Mandataire: Lavoix

(56) Documents cités:
- EP-A1- 2 423 014
- EP-A1- 2 444 294
- EP-A1- 3 219 548
- WO-A1-2015/130571

## Description

La présente invention concerne selon un premier aspect un dispositif de gestion de la lumière pour véhicule, notamment ferroviaire.

Le véhicule ferroviaire est par exemple, un train, un tramway, ou un métro. En variante, le véhicule est un bus ou un autocar.

La plupart des dispositifs d'éclairage pour véhicule ferroviaire sont plutôt de conception basique. Ils comprennent une unité de commande qui contrôle une ou plusieurs sources lumineuses disposées à l'intérieur du compartiment passagers. Généralement, le contrôle de la lumière est binaire (éclairage actif ou inactif) et est réalisé manuellement par le conducteur ou par le personnel de bord. D'autres dispositifs plus sophistiqués comprennent par exemple un ou plusieurs capteurs de luminosité à l'intérieur du compartiment passagers afin de contrôler de manière automatique l'éclairage en fonction de la mesure de la luminosité ambiante. La plupart du temps, lorsque la luminosité extérieure est inférieure à un premier seuil prédéfini, l'éclairage est activé. A l'inverse, dès que la luminosité dépasse des seuils prédéfinis, l'éclairage est adapté en intensité selon des niveaux prédéfinis.

EP 3 219 548 A1 décrit un dispositif de gestion d'éclairage comportant un système d'éclairage variable comprenant au moins un capteur de lumière extérieure, propre à mesurer des caractéristiques de la lumière à l'extérieur du véhicule, et au moins un dispositif de capture d'image intérieur, propre à capturer des images à l'intérieur de la salle, et une unité de commande du système d'éclairage, configurée pour ajuster l'éclairage dans la salle en fonction de la luminosité mesurée à l'extérieur du véhicule et des images capturées à l'intérieur de la salle.

Les fonctionnalités des dispositifs de gestion de la lumière actuels sont limitées et peu polyvalentes.

Un objectif de l'invention est de proposer un dispositif de gestion de la lumière pour véhicule, notamment ferroviaire, qui permette d'améliorer les conditions de voyage des passagers, notamment en améliorant leur confort, leur sensation de sécurité et en leur apportant par l'intermédiaire de l'éclairage des informations utiles à leur voyage.

A cet effet, l'invention a pour objet un dispositif de gestion de la lumière pour véhicule, notamment ferroviaire, selon la revendication 1.

Un tel dispositif de gestion de la lumière permet d'améliorer le confort des passagers notamment en utilisant l'éclairage comme vecteur d'informations (informations relatives à la position du véhicule sur le trajet, informations sur les voitures du véhicule ferroviaire présentant une densité de passagers plus faible, etc...).

Suivant des modes particuliers de réalisation, le dispositif de contrôle comprend l'une ou plusieurs des caractéristiques des caractéristiques des revendications 2 à 6, selon toutes combinaisons techniquement possibles.

L'invention concerne selon un deuxième aspect un véhicule, notamment ferroviaire, selon la revendication 7.

Enfin, l'invention concerne selon un troisième aspect un procédé de gestion de la lumière d'un véhicule, notamment ferroviaire, selon la revendication 8.

D'autres caractéristiques et avantages de l'invention apparaîtront à la lecture de la description qui va suivre, donnée uniquement à titre d'exemple et faite en se référant aux dessins annexés, parmi lesquels :
- la figure 1 est une vue schématique générale d'un dispositif de gestion de la lumière pour véhicule ferroviaire selon un premier mode de réalisation de l'invention ;
- la figure 2 est une vue schématique générale d'un dispositif de gestion de la lumière pour véhicule ferroviaire selon un deuxième mode de réalisation de l'invention ;
- la figure 3 est une vue schématique générale d'un dispositif de gestion de la lumière pour véhicule ferroviaire selon un troisième mode de réalisation de l'invention ; et
- la figure 4 est un exemple de rythme circadien utilisé pour le contrôle de la caractéristique du rayonnement lumineux par un dispositif selon un mode de réalisation de l'invention.

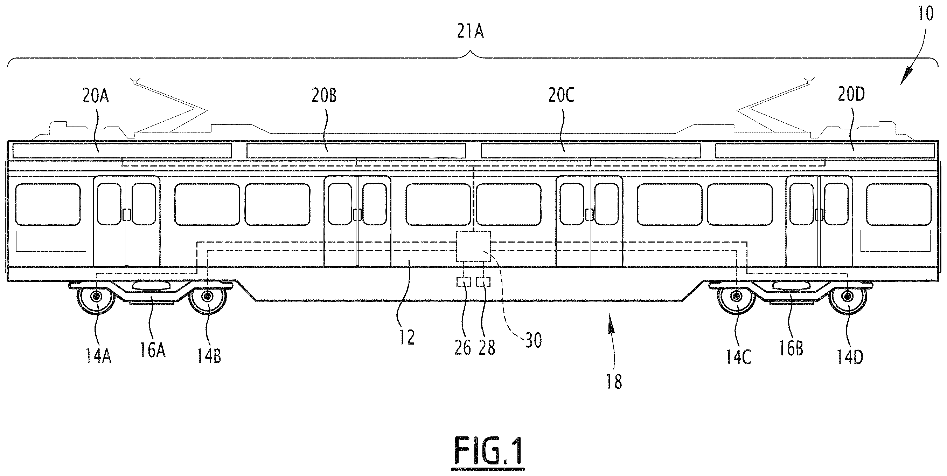

La figure 1 représente une voiture 10 d'un véhicule selon l'invention. Dans l'exemple de la figure 1, le véhicule est un véhicule ferroviaire.

Le véhicule ferroviaire est par exemple un train, un tramway ou un métro. En variante, le véhicule est un bus ou un autocar.

Dans l'exemple de la figure 1, le véhicule ferroviaire comprend typiquement une pluralité de voitures 10 reliées entre elles et s'étendant principalement selon une direction longitudinale.

Chaque voiture 10 comprend au moins un compartiment passagers 12 destiné à recevoir les passagers en position assise et/ou en position debout. Pour ce faire, chaque compartiment passagers 12 comprend une pluralité de sièges (non représentés) fixés à un plancher de la voiture 10.

Chaque voiture 10 comprend au moins un essieu 14A, ..., 14D, de préférence au moins deux essieux 14A, ..., 14D.

Par exemple, les essieux 14, ...14D sont fixés sur un bogie 16A, 16B.

Dans les exemples des modes de réalisation des figures 1 à 3, la voiture comprend deux bogies 16A, 16B comprenant chacun deux essieux 14A, ..., 14D.

La voiture 10 comprend en outre un dispositif 18 de gestion de la lumière.

Le dispositif 18 selon l'invention comprend au moins une source lumineuse 20A, ..., 20G émettant un rayonnement lumineux présentant au moins une caractéristique optique.

De préférence, le dispositif 18 comprend une pluralité de sources lumineuses 20A, ..., 20G.

La ou les source(s) lumineuse(s) 20A, ..., 20G comprennent par exemple au moins une carte de diodes électroluminescentes (LED pour « light-emitting diode » en langue anglaise), au moins un spot ou une ampoule comprenant au moins une diode électroluminescente.

La ou les source(s) lumineuse(s) 20A, ..., 20G sont préférentiellement destinée(s) à éclairer l'intérieur du compartiment passagers 12.

En variante ou en complément, au moins une des sources lumineuses 20A, ..., 20G est préférentiellement destinée à assurer un éclairage complémentaire de l'éclairage principal du compartiment passager.

La ou les source(s) lumineuse(s) 20A, ..., 20G sont par exemple fixée(s) au niveau d'un plafond de la voiture 10, au niveau du plancher de la voiture 10, dans un panneau latéral, dans un siège, dans un accoudoir, dans un couloir d'accès, dans un escalier, dans une tablette, autour des portes d'entrées et de sorties, etc...

En variante ou en complément, au moins une source lumineuse est fixée de sorte que le rayonnement lumineux soit orienté majoritairement vers l'extérieur de la voiture 10.

En variante ou en complément, au moins une source lumineuse 20A, ..., 20G est par exemple fixée à l'intérieur de l'au moins un compartiment passagers et visible de l'extérieur de l'au moins un compartiment passagers 12.

En variante ou en complément, au moins une source lumineuse 20A, ..., 20G est fixée à l'extérieur de l'au moins un compartiment passagers, sur une paroi extérieure de l'au moins une voiture 10.

Par souci de simplification, sur la figure 1, le dispositif 18 comprend quatre sources lumineuses 20A, ..., 20G représentées au niveau du plafond de la voiture 10.

Préférentiellement, les sources lumineuses 20A, ..., 20G sont regroupées entre elles pour former au moins un groupe de sources lumineuses, de préférence une pluralité de groupes 21A, ..., 21H de sources lumineuses 20A, ..., 20G.

Les sources lumineuses 20A, ..., 20G d'un même groupe 21A, ..., 21H de sources lumineuses 20A, ..., 20G émettent un rayonnement lumineux présentant la ou les même(s) caractéristique(s) optique(s).

Préférentiellement, le véhicule est divisé en une pluralité de zones 22A, ..., 22F d'éclairage.

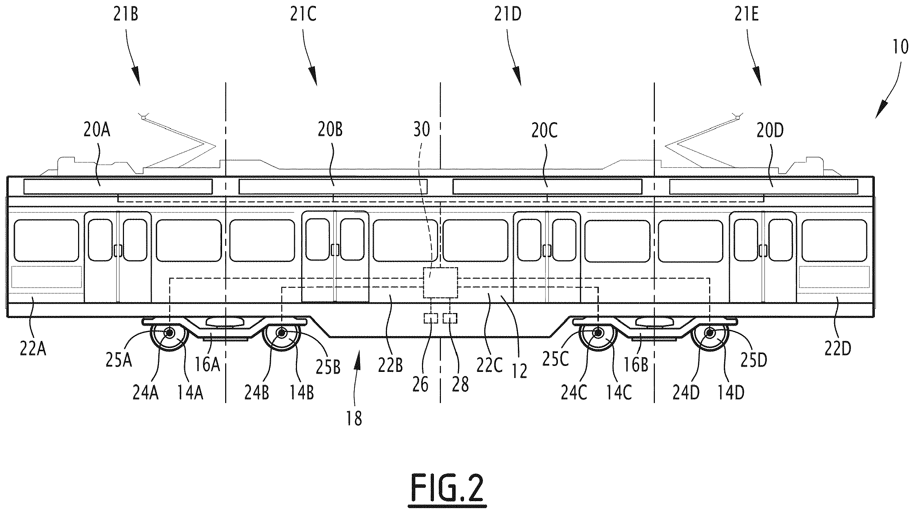

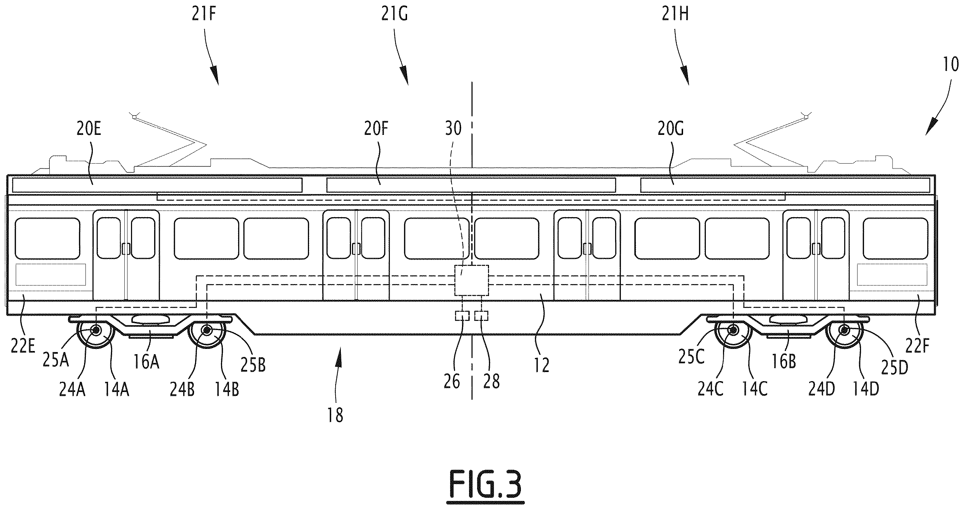

De préférence, comme visible sur les figures 2 et 3, le compartiment passagers 12 de chaque voiture 10 du véhicule est divisé en une pluralité de zones 22A, ..., 22F d'éclairage, chaque zone 22A, ..., 22F d'éclairage étant associée à un groupe de sources lumineuses (voir figures 2 et 3).

La caractéristique optique du rayonnement lumineux est par exemple la longueur d'onde du rayonnement lumineux.

La longueur d'onde du rayonnement lumineux de la source lumineuse est typiquement celle du domaine visible, c'est-à-dire que la longueur d'onde est comprise entre 400 nm à 700 nm.

La caractéristique optique du rayonnement lumineux est par exemple le flux lumineux du rayonnement lumineux.

On entend par « flux lumineux » la quantité de lumière émise dans toutes les directions.

En variante, la caractéristique optique du rayonnement est une intensité lumineuse.

On entend par « intensité lumineuse » la quantité de lumière émise dans une direction donnée.

La caractéristique optique est par exemple la température de couleur (aussi désignée en anglais par l'acronyme CCT pour *Correlated Color Température*).

On entend par « température de couleur » la température d'un corps noir incandescent qui donnerait une lumière calorimétrique équivalente.

Typiquement, la température de couleur est comprise entre 2800°K et 6500°K.

Le dispositif 18 selon l'invention comprend au moins un capteur 24A, ..., 26, 28 choisi parmi un capteur de mesure 25A, ..., 25D, d'une densité de passagers à bord du véhicule, formé par un capteur de charge à l'essieu 24A, ..., 24D, un capteur de position 26 du véhicule, et/ou une horloge 28.

Préférentiellement, les capteurs de mesure de la densité de passagers sont propres à calculer une densité de passagers par zone dans le véhicule, et en particulier par zone d'éclairage du compartiment passagers 12.

Dans la présente invention, l'horloge 28 est considérée comme un capteur configuré pour acquérir au moins un paramètre représentatif du temps, comme l'heure et/ou la date.

Dans les exemples des figures 1 à 3, le dispositif 18 comprend quatre capteurs de charge à l'essieu 24A, ..., 24D, un capteur de position 26 du véhicule ferroviaire, et une horloge 28.

En variante ou en complément les capteurs de mesure 25A, ..., 25D de la densité de passagers comprennent des caméras propres à être embarquées dans le véhicule et à calculer une densité de passagers par zone dans le véhicule, et préférentiellement par zone dans la voiture.

Le dispositif 18 selon l'invention comprend en outre une unité de commande 30 connectée à l'au moins un capteur 24A, ..., 24D, 26, 28 et à l'au moins une source lumineuse 20A, ..., 20G. L'unité de commande 30 est configurée pour contrôler l'au moins une caractéristique optique du rayonnement lumineux en fonction d'une mesure de l'au moins un capteur 24A, ..., 24D, 26, 28.

Selon un mode de réalisation, le dispositif 18 comprend au moins deux capteurs 24A, ..., 24D, 26, 28 choisis parmi un capteur de charge à l'essieu 24A, ..., 24C, un capteur de position 26 du véhicule ferroviaire, et/ou une horloge 28.

L'unité de commande 30 est alors configurée pour contrôler une première caractéristique du rayonnement lumineux en fonction d'une mesure du premier capteur 24A, ..., 24C, 26, 28 et une deuxième caractéristique du rayonnement lumineux en fonction d'une mesure du deuxième capteur 24A, ..., 24C, 26, 28.

Le dispositif 18 comprend pour chaque essieu 14A, ..., 14D de l'au moins une voiture 10 un capteur de charge 24A, ..., 24D à l'essieu connecté à l'essieu 14A, ..., 14D. Le capteur 24A, ..., 24D est configuré pour mesurer une charge supportée par l'essieu 14A, ..., 14D.

De manière connue, le capteur de charge 24A, ..., 24D transforme la charge à l'essieu en un signal électrique proportionnel à la charge mesurée.

Préférentiellement, le dispositif 18 comprend au moins un capteur de charge 24A, ..., 24D associé à chacune des zones d'éclairage 22A, ..., 22F. Plus particulièrement, l'au moins un capteur de charge 24A, ..., 24D est fixé à l'essieu 14A, ..., 14D situé sous ladite zone d'éclairage 22A, ..., 22F associée et qui supporte ladite zone d'éclairage 22A, ..., 22F associée.

La figure 1 illustre un premier mode de réalisation de l'invention. Le dispositif 18 comprend un unique groupe 21A de sources lumineuses 20A, ..., 20D regroupant l'ensemble des sources lumineuses du compartiment passagers 12. La zone d'éclairage est ainsi formée par la totalité du compartiment passagers 12.

La voiture 10 comprend quatre essieux 14A, ..., 14D. Le dispositif 18 selon l'invention comprend ainsi quatre capteurs de charge 24A, ..., 24D connectés à chacun des essieux 14A, ..., 14D de la voiture 10 et à l'unité de commande 30.

L'unité de commande 30 est configurée pour contrôler la caractéristique optique du rayonnement des sources lumineuses 20A, ..., 20D de l'unique groupe 21A de sources lumineuses en fonction par exemple de la charge moyenne ou de la somme des charges mesurées par les quatre capteurs de charge 24A, ..., 24D.

La figure 2 illustre un deuxième mode de réalisation de l'invention dans lequel le compartiment passagers 12 est divisé en quatre zones d'éclairage 22A, ..., 22D.

Le dispositif 18 comprend quatre groupes 21B, ..., 21E de sources lumineuses associés respectivement à chacune des zones d'éclairage 22A, ..., 22D. Par souci de simplification, dans l'exemple de la figure 2, chaque groupe 21B, ..., 21E ne comprend qu'une seule source lumineuse 20A, ..., 20D respectivement.

L'unité de commande 30 est alors configurée pour contrôler l'au moins une caractéristique optique du rayonnement lumineux de chaque groupe 21B, ..., 21E en fonction respectivement du ou des capteurs de charge 24A, ..., 24D disposés sous chacune des zones d'éclairage 22A, ..., 22D.

Ainsi, dans l'exemple de la figure 2, l'au moins une caractéristique optique du groupe 21B de sources lumineuses de la zone d'éclairage 22A est contrôlée en fonction de la charge mesurée par le capteur de charge 24A connecté à l'essieu 14A disposé sous la zone d'éclairage 22A du compartiment passagers 12.

En variante, , les capteurs de charge à l'essieu sont complétés par d'autres types de capteurs de mesure de la densité de passagers, tels que des caméras propres à déterminer une densité de passagers pour chaque zone d'éclairage et l'unité de commande 30 est alors configurée pour contrôler l'au moins une caractéristique optique du rayonnement lumineux de chaque groupe 21B, ..., 21E, telle que la couleur et/ou le flux lumineux en fonction des densités de passagers mesurées pour chaque zone d'éclairage par l'ensemble des capteurs de mesure de la densité de passagers.

En variante, dans des modes de réalisation non couverts par la présente demande, les capteurs de charge à l'essieu sont remplacés par d'autres types de capteurs de mesure de la densité de passagers, tels que des caméras propres à déterminer une densité de passagers pour chaque zone d'éclairage et l'unité de commande 30 est alors configurée pour contrôler l'au moins une caractéristique optique du rayonnement lumineux de chaque groupe 21B, ..., 21E, telle que la couleur et/ou le flux lumineux en fonction des densités de passagers mesurées pour chaque zone d'éclairage par l'ensemble des capteurs de mesure de la densité de passagers.

Un tel mode de réalisation permet via les mesures réalisées par les capteurs de mesure de la densité de passagers de contrôler indépendamment les groupes de sources lumineuses en fonction de la densité de passagers dans chaque zone d'éclairage pour, par exemple, indiquer visuellement aux passagers les zones les moins denses, ou bien les inciter à redoubler de vigilance dans les zones les plus denses.

La figure 3 présente un troisième mode de réalisation de l'invention.

Le compartiment passagers 12 est divisé en une première et une deuxième zones 22E, 22F d'éclairage.

Le dispositif 18 selon l'invention comprend un premier, un deuxième et un troisième groupes 21F, 21G, 21H de sources lumineuses 20E, 20F, 20G. Les premier et troisième groupes 21F, 21H de sources sont respectivement associés aux première et deuxième zones 22E, 22F d'éclairage.

Le deuxième groupe 21G de sources 20F est un groupe de transition disposé selon la direction longitudinale entre le premier groupe 21F et le troisième groupe 21H de sources 20E, 20G.

L'unité de commande 30 est configurée pour contrôler l'au moins une caractéristique optique du rayonnement lumineux du premier groupe 21F de sources 20E en fonction de la charge mesurée par les capteurs de charge 24A, 24B du premier bogie 16A. Par exemple, le contrôle est effectué en fonction de la moyenne de la charge mesurée par les deux capteurs de charge 24A, 24B ou en fonction de la somme des charges mesurées par les deux capteurs de charge 24A, 24B.

Le premier groupe 21F de sources 20E émet un rayonnement lumineux présentant une première valeur d'au moins une caractéristique optique.

L'au moins une caractéristique optique du rayonnement lumineux du troisième groupe 21H de sources 20G est contrôlée de manière similaire par l'unité de commande 30 en fonction des capteurs de charges 24C, 24D du deuxième bogie 16B.

Le troisième groupe 21H de sources 20G émet un rayonnement lumineux présentant une troisième valeur d'au moins une caractéristique optique, différente de la première valeur de l'au moins une caractéristique optique.

Le deuxième groupe 21G de sources 20F émet un rayonnement lumineux présentant une deuxième valeur de l'au moins une caractéristique optique.

L'unité de commande 30 est configurée pour contrôler la deuxième valeur de l'au moins une caractéristique optique de sorte à ce que la deuxième valeur soit une valeur intermédiaire par rapport à la première valeur et à la troisième valeur.

Par exemple, la deuxième valeur est une valeur interpolée linéairement entre la première valeur et la troisième valeur.

Dans l'exemple ci-dessous, l'au moins une caractéristique optique est par exemple la température de couleur et/ou le flux lumineux.

Ainsi, les sources lumineuses 20E, 20F, 20G émettent un rayonnement lumineux présentant une caractéristique optique continue d'une source à une autre, ce qui améliore l'aspect esthétique général de l'éclairage de la voiture 10.

Préférentiellement, dans l'ensemble des modes de réalisation décrits ci-dessus, l'unité de commande 30 est configurée pour contrôler la température de couleur et le flux lumineux du rayonnement des sources lumineuses 20A, ..., 20G en fonction de la charge mesurée par les capteurs de charge 24A, ..., 24D.

Par exemple, lorsque la charge à l'essieu est élevée, c'est-à-dire lorsque la densité de passagers dans la zone d'éclairage associée est élevée, le rayonnement lumineux présente une température de couleur froide (par exemple égale ou supérieure à 5000 K) et un flux lumineux élevé (par exemple, entre 600 et 1000 Im/m).

A l'inverse, lorsque la charge à l'essieu est faible, c'est-à-dire lorsque la densité de passagers dans la zone d'éclairage associée est faible, le rayonnement lumineux présente une température de couleur chaude (par exemple entre 3000 K et 4000 K) et un flux lumineux faible (par exemple, entre 300 et 600 Im/m).

Ainsi, la caractéristique optique du rayonnement lumineux apporte une information au passager relative à la densité de passagers à l'intérieur du compartiment passagers 12, et plus particulièrement au niveau d'une zone d'éclairage. Le passager peut alors se déplacer vers une zone moins dense, par exemple vers l'avant ou l'arrière du véhicule ferroviaire.

L'information est également utilisable par les passagers sur le quai qui, à l'arrivée du train en station, peuvent se diriger vers les voitures où la densité de passagers est la plus faible. La montée et la descente des passagers s'en trouvent également facilitées et les temps d'arrêt sont minimisés.

De plus, ceci contribue également à équilibrer la charge sur l'ensemble des essieux du véhicule ferroviaire.

Enfin, il a été observé que certaines caractéristiques optiques du rayonnement lumineux améliorent le confort du passager. Ainsi, dans un environnement dense en passagers, un éclairage plus puissant et froid améliore le sentiment de bien-être et de sécurité ressenti par le passager. Ce même éclairage dans un environnement peu dense en passagers est perçu comme agressif et inconfortable pour le passager.

Au contraire, un éclairage moins fort et plus chaud dans un environnement peu dense en passagers améliore le sentiment de bien-être du passager.

Le capteur de position 26 est par exemple un capteur de position GPS (pour global positioning system en langue anglaise).

En variante, le capteur de position 26 est par exemple un capteur destiné à interagir avec des bornes de positionnement sur la ligne ferroviaire pour déterminer la position du véhicule ferroviaire sur la ligne.

Dans les exemples des figures 1 à 3, le capteur de position est représenté schématiquement au niveau de la voiture 10. Cependant, le capteur de position 26 est de préférence fixé sur une paroi extérieure de la motrice du véhicule ferroviaire ou d'une voiture 10 du véhicule ferroviaire.

Le véhicule ferroviaire parcourt une ligne ferroviaire. La ligne ferroviaire comprend une pluralité de stations au niveau desquelles le véhicule ferroviaire marque un arrêt, débarque et embarque des passagers. La ligne ferroviaire est divisée en une pluralité de tronçons, chaque tronçon étant délimité par deux stations. Le terminus correspond à la dernière station de la ligne ferroviaire.

Préférentiellement, le capteur de position 26 mesure en continu la position du véhicule ferroviaire tout au long de la ligne ferroviaire.

Selon un mode de réalisation, le capteur de position 26 est configuré pour détecter que le véhicule ferroviaire atteint une position prédéterminée.

L'unité de commande 30 est alors configurée pour contrôler l'au moins une caractéristique optique du rayonnement de l'au moins une source lumineuse 20A, ..., 20G pour que ladite au moins une source lumineuse 20A, ..., 20G émette un rayonnement lumineux dont l'au moins une caractéristique optique présente une valeur prédéterminée associée à ladite position.

Par exemple, la position prédéterminée du véhicule ferroviaire correspond à une position à l'extérieur d'un tunnel ou à une position à l'intérieur d'un tunnel.

Par exemple, la caractéristique optique est le flux lumineux. L'unité de commande 30 contrôle le flux lumineux du rayonnement lumineux de sorte que ledit flux à l'intérieur du tunnel soit supérieur au flux lumineux du rayonnement à l'extérieur du tunnel.

Selon un autre mode de réalisation, la position prédéterminée du véhicule ferroviaire correspond à une position du véhicule ferroviaire sur la ligne ferroviaire du véhicule ferroviaire ou à la position du véhicule ferroviaire au terminus de la ligne ferroviaire.

La caractéristique optique est par exemple la longueur d'onde ou la température de couleur.

L'unité de commande 30 est alors configurée pour contrôler la caractéristique du rayonnement lumineux de sorte à ce que la longueur d'onde et/ou la température de couleur du rayonnement lumineux lorsque le véhicule ferroviaire est au terminus de la ligne ferroviaire soit différente de celles du rayonnement lorsque le véhicule ferroviaire circule sur la ligne ferroviaire. Par exemple, la caractéristique optique du rayonnement lumineux lorsque le véhicule circule sur la ligne ferroviaire correspond à une lumière jaune ou blanche et la caractéristique optique du rayonnement lumineux lorsque le véhicule est au terminus correspond à une lumière orange ou rouge.

Ainsi, la caractéristique du rayonnement lumineux informe le passager de l'arrivée au terminus du véhicule ferroviaire et invite ce dernier à quitter le compartiment passagers 12. De la même manière, la caractéristique optique du rayonnement lumineux indique aux passagers sur le quai que le véhicule ferroviaire ne prend pas de passagers.

Selon un autre mode de réalisation, l'unité de commande 30 contrôle la caractéristique optique du rayonnement lumineux des sources lumineuses 20A, ...20G en fonction de la position du véhicule ferroviaire sur la ligne ferroviaire.

Par exemple, la ligne ferroviaire du véhicule ferroviaire comprend cinq stations et quatre tronçons. Pour chacun des tronçons, la caractéristique optique et plus particulièrement la valeur de la caractéristique optique, comme la longueur d'onde du rayonnement lumineux, c'est-à-dire la couleur du rayonnement lumineux, est par exemple différente d'un tronçon à l'autre.

Ainsi en tout temps, le passager sait où il se trouve sur la ligne ferroviaire et plus particulièrement sur quel tronçon il se trouve. Le rayonnement lumineux apporte une information de localisation au passager.

En variante ou en complément, l'unité de commande 30 est configurée pour contrôler au moins une caractéristique optique du rayonnement lumineux à l'arrivée ou au départ de chacune des stations de la ligne ferroviaire en utilisant la position détectée par le capteur de position 26. Par exemple, à l'arrivée dans une station, le flux lumineux d'au moins un groupe de sources lumineuses 20A, ..., 20G est augmentée afin de prévenir les passagers de l'arrivée en station et de les guider vers la sortie.

En variante ou en complément, l'unité de commande 30 est configurée pour faire varier la valeur de l'au moins une caractéristique optique du rayonnement de l'au moins une source lumineuse 20A, ..., 20G en fonction d'un paramètre représentatif du temps fourni par l'horloge 28 selon une courbe de variation temporelle prédéterminée de ladite valeur.

Par exemple, la courbe de variation temporelle est caractéristique d'un cycle circadien humain.

La caractéristique optique est par exemple la température de couleur.

Le rythme circadien regroupe tous les processus biologiques cycliques du corps humain d'une durée d'environ 24 heures. Le rythme circadien intègre notamment le rythme veille-sommeil du corps humain.

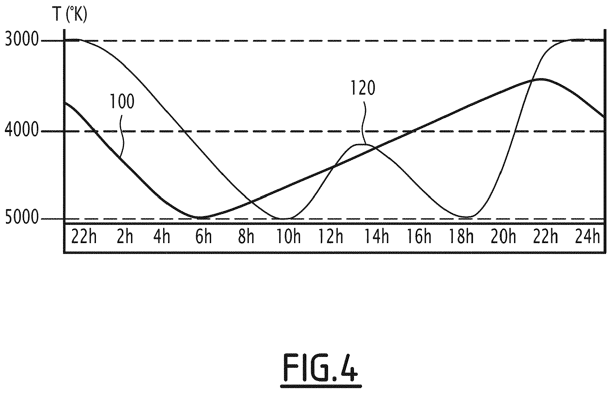

La figure 4 présente un exemple de rythme circadien. La courbe 100 présente la variation du niveau de besoin de sommeil moyen pour un humain au cours de la journée. Dans l'exemple de la figure 4, le besoin de sommeil moyen est maximal vers 22h. La courbe 120 présente une variation possible au cours de la journée pour la température de couleur du rayonnement optique du ou des groupes de sources lumineuses. La température de couleur dudit rayonnement optique est dans cet exemple plus froide dans la journée aux heures où les passagers sont le plus actifs, et plus chaude le soir et tôt le matin, offrant ainsi un plus grand confort aux passagers.

Dans cet exemple, le paramètre représentatif du temps fourni par l'horloge 28 comprend l'heure de la journée et/ou la date.

Ceci permet d'améliorer le confort du passager en adaptant la caractéristique optique du rayonnement lumineux à l'état biologique du corps humain.

En variante ou en complément, l'unité de commande 30 est configurée pour faire varier la valeur de l'au moins une caractéristique optique du rayonnement de l'au moins une source lumineuse 20A, ..., 20G en fonction d'un paramètre représentatif du temps fourni par l'horloge 28 et d'un paramètre de position mesuré par le capteur de position 26, selon une courbe de variation temporelle prédéterminée associé au couplage des 2 paramètres.

Par exemple, la caractéristique optique est la couleur de la source lumineuse 20A, ..., 20G. L'unité 30 contrôle la variation de couleur de la source lumineuse afin de donner une indication visant à faciliter la montée et la descente des passagers de la voiture 10.

En variante ou en complément, l'unité de commande 30 est configurée pour contrôler au moins une caractéristique du rayonnement lumineux de l'au moins une des sources lumineuses 20A, ..., 20G en fonction de la température moyenne extérieure.

Par exemple, la température extérieure est une température moyenne extérieure mensuelle fourni par un abaque qui associe à chaque mois de l'année une température extérieure moyenne.

En variante, le paramètre de la température extérieure est relevé par un thermomètre localisé à l'extérieure du véhicule ferroviaire.

Préférentiellement, la caractéristique optique du rayonnement lumineux est la température de couleur. La température de couleur du rayonnement lumineux est par exemple inversement proportionnelle à la température extérieure : le rayonnement lumineux présente une température de couleur froide (>4000 K) quand la température extérieure est élevée (l'été par exemple). Inversement, le rayonnement lumineux présente une température plus chaude (<4000 K) quand la température extérieure est plus basse (l'hiver par exemple).

En variante ou en complément encore, la courbe de variation de la valeur de l'au moins une caractéristique optique du rayonnement est une courbe sinusoïdale caractéristique de la respiration humaine.

La fréquence de la courbe sinusoïdale est préférentiellement sensiblement égale à la fréquence respiratoire de l'homme au repos. La fréquence est par exemple comprise 10 et 20 cycles par minutes.

Ceci permet d'améliorer le confort du passager et procure un effet apaisant sur le passager.

Un procédé de gestion de la lumière d'un véhicule ferroviaire en utilisant un dispositif tel que décrit ci-dessus va maintenant être décrit.

Le procédé selon l'invention comprend tout d'abord une étape de mesure d'une charge à l'essieu et/ou d'une position du véhicule ferroviaire et/ou d'un paramètre représentatif du temps avec respectivement au moins un capteur 24A, ..., 24D, 26, 28 choisi parmi un capteur de charge à l'essieu 24A, ..., 24D et/ou un capteur de position 26 du véhicule ferroviaire et/ou une horloge 28.

Le procédé comprend ensuite une étape de contrôle d'au moins une caractéristique optique d'un rayonnement lumineux d'au moins une source lumineuse 20A, ..., 20D en utilisant la mesure de la charge à l'essieu et/ou la mesure de la position du véhicule ferroviaire et/ou du paramètre représentatif du temps.

En référence à la figure 1, un premier mode de réalisation d'un procédé selon l'invention est décrit.

Le procédé comprend une étape de mesure de la charge à l'essieu en utilisant les quatre capteurs de charge 24A, ..., 24D fixés respectivement sur les quatre essieux 14A, ..., 14D de la voiture 10.

L'étape de contrôle comprend le contrôle de la caractéristique optique des sources lumineuses 20A, ..., 20D regroupées en un unique groupe 21A de sources lumineuses 20A, ..., 20D en fonction par exemple de la charge moyenne ou de la somme des charges mesurées par les quatre capteurs de charge 24A, ..., 24D.

En référence à la figure 2, un deuxième mode de réalisation d'un procédé selon l'invention est décrit.

L'étape de mesure de la charge à l'essieu est identique à celle du premier mode de réalisation.

Le compartiment passagers 12 est divisé en une pluralité de zones d'éclairage 22A, ..., 22D.

Le procédé comprend alors le contrôle de l'au moins une caractéristique optique du rayonnement lumineux de chaque groupe 21B, ..., 21E en fonction respectivement du ou des capteurs de charges 24A, ..., 24D disposés sous chacune des zones d'éclairage 22A, ..., 22D.

En référence à la figure 3, un troisième mode de réalisation d'un procédé selon l'invention est décrit.

La pluralité de sources lumineuses est regroupée en au moins un premier, un deuxième et un troisième groupes 21F, 21G, 21H de sources lumineuses 20E, 20F, 20G.

Le deuxième groupe 21G est disposé entre le premier groupe 21F et le troisième groupe 21H selon la direction longitudinale.

L'étape de contrôle comprend le contrôle de la valeur de l'au moins une caractéristique optique du rayonnement lumineux de la ou des sources lumineuses du deuxième groupe 21G en fonction des valeurs des caractéristiques optiques du rayonnement lumineux des sources lumineuses du premier et du troisième groupes 21F, 21H.

Par exemple, l'au moins une caractéristique optique du rayonnement lumineux des sources lumineuses du deuxième groupe 21G présente une valeur intermédiaire par rapport aux valeurs des caractéristiques optiques des rayonnements lumineux des sources lumineuses des premier et troisième groupes 21F, 21H.

Préférentiellement, la valeur de l'au moins une caractéristique optique du rayonnement lumineux des sources lumineuses du deuxième groupe 21G est une valeur interpolée linéairement entre les valeurs des caractéristiques optiques des premier et troisième groupes 21F, 21H.

En variante ou en complément, le procédé comprend la fourniture d'un paramètre représentatif du temps avec l'horloge 28, le paramètre étant représentatif de l'heure et/ou de la date, le contrôle de la caractéristique optique comprenant faire varier la valeur de l'au moins une caractéristique optique du rayonnement de l'au moins une source lumineuse 20A, ..., 20G en fonction dudit paramètre selon une courbe de variation temporelle prédéterminée de ladite valeur.

Par exemple, la courbe de variation temporelle est caractéristique d'un cycle circadien humain ou la courbe de variation est une courbe sinusoïdale caractéristique de la respiration humaine.

En variante ou en complément encore, le procédé comprend la détection d'une position prédéterminée atteinte par le véhicule ferroviaire en utilisant un capteur de position 26, et le contrôle d'au moins une caractéristique optique du rayonnement de l'au moins une source lumineuse 20A, ..., 20G pour que ladite au moins une source lumineuse 20A, ..., 20G émette un rayonnement lumineux dont l'au moins une caractéristique optique présente une valeur prédéterminée associée à ladite position.

Ainsi, le dispositif 18 de gestion de la lumière pour véhicule ferroviaire est particulièrement avantageux car il permet d'utiliser le rayonnement lumineux des sources lumineuses 20A, ..., 20G présentes dans le compartiment voyageurs 12 pour véhiculer de l'information au passager. Cette information est notamment relative à la densité de passagers à bord, la position du véhicule ferroviaire sur la ligne, l'arrivée à une station ou au terminus etc. Le dispositif 18 selon l'invention permet en outre d'améliorer le confort du passager et d'améliorer son expérience de voyage.

## Revendications

1. Dispositif (18) de gestion de la lumière pour véhicule, notamment ferroviaire, le véhicule comprenant au moins une voiture (10) s'étendant principalement selon une direction longitudinale et comportant une pluralité d'essieux (14A, ... , 14C), le dispositif (18) comprenant :
- une pluralité de capteurs de mesure de la densité de passagers à bord du véhicule propres à calculer une densité de passagers par zone dans le véhicule,
- une pluralité de sources lumineuses (20A, ..., 20G) regroupées en au moins deux groupes (21A, ..., 21H) de sources lumineuses, chaque groupe étant associée à une zone respective du véhicule et chaque source (20A, ..., 20G) d'un même groupe (21A, ..., 21H) de sources émettant un rayonnement lumineux présentant la même caractéristique optique,
- une unité de commande (30) connectée à chacun des capteurs de mesure de la densité de passagers, et aux sources lumineuses (20A, ..., 20G), l'unité de commande (30) étant configurée pour contrôler la caractéristique optique du rayonnement des sources lumineuses (20A, ..., 20G) d'un même groupe de sources lumineuses (21A, ..., 21H) en fonction de la densité de passagers mesurée pour la zone correspondante, **caractérisé en ce que** la pluralité de capteurs de mesure de la densité de passagers est formée par une pluralité de capteurs de charge (24A, ..., 24D) à l'essieu destinés à être connectés respectivement aux essieux (14A, ..., 14C), chaque capteur de charge (24A, ..., 24D) étant configuré pour mesurer une charge supportée par l'essieu (14A, ..., 14C) correspondant.

2. Dispositif (18) selon la revendication 1, dans lequel le dispositif (18) comprend au moins un deuxième capteur (26, 28) choisi parmi un capteur (26) de position du véhicule, et/ou une horloge (28), l'unité de commande (30) étant configuré pour contrôler une première caractéristique du rayonnement lumineux en fonction d'une mesure du capteur de mesure de la densité de passagers à bord du véhicule (24A, ..., 24D), et une deuxième caractéristique du rayonnement lumineux en fonction d'une mesure du deuxième capteur (26, 28).

3. Dispositif (18) selon la revendication 1 ou 2, dans lequel l'au moins une caractéristique optique du rayonnement lumineux est choisie parmi : la longueur d'onde du rayonnement lumineux, le flux lumineux du rayonnement lumineux, la température de couleur du rayonnement lumineux.

4. Dispositif (18) selon l'une quelconque des revendications 1 à 3, dans lequel, la ou chaque voiture (10) comprend au moins un compartiment passagers (12), l'au moins une source lumineuse étant destinée à éclairer l'intérieur de l'au moins un compartiment passagers (12).

5. Dispositif (18) selon l'une quelconque des revendications 1 à 4, dans lequel le dispositif (18) comprend un capteur de position (26) du véhicule configuré pour détecter que le véhicule atteint une position prédéterminée, l'unité de commande (30) étant configurée pour contrôler l'au moins une caractéristique optique du rayonnement de l'au moins une source lumineuse (20A, ..., 20G) pour que ladite au moins une source lumineuse (20A, ..., 20G) émette un rayonnement lumineux dont l'au moins une caractéristique optique présente une valeur prédéterminée associée à ladite position.

6. Dispositif (18) selon l'une quelconque des revendications 1 à 5, dans lequel le dispositif (18) comprend une horloge (28), l'horloge (28) fournissant un paramètre représentatif du temps, l'unité de commande (30) étant configurée pour faire varier la valeur de l'au moins une caractéristique optique du rayonnement de l'au moins une source lumineuse (20A, ..., 20G) en fonction dudit paramètre selon une courbe de variation temporelle prédéterminée de ladite valeur, la courbe de variation temporelle étant de préférence caractéristique d'un cycle circadien humain ou la courbe de variation est une courbe sinusoïdale caractéristique de la respiration humaine.

7. Véhicule, notamment ferroviaire, comprenant au moins une voiture (10), l'au moins une voiture (10) comportant au moins un essieu (14A, ...,14D), le véhicule comprenant en outre un dispositif (18) selon l'une quelconque des revendications 1 à 6.

8. Procédé de gestion de la lumière d'un véhicule, notamment ferroviaire, le véhicule comprenant au moins une voiture (10), la ou chaque voiture (10) comportant une pluralité d'essieux (14A, ..., 14C), le véhicule comprenant une pluralité de sources lumineuses (20A, ..., 20G) regroupées en au moins deux groupes (21A, ..., 21H) de sources lumineuses, chaque groupe étant associé à une zone respective du véhicule et chaque source (20A, ..., 20G) d'un même groupe (21A, ..., 21H) de sources émettant un rayonnement lumineux présentant la même caractéristique optique, le procédé comprenant les étapes suivantes :
- mesure d'une densité de passagers à bord du véhicule par zone dans le véhicule avec une pluralité de capteurs (24A, ..., 24D) de mesure de la densité de passagers, la pluralité de capteurs de mesure de la densité de passagers étant formée par une pluralité de capteurs de charge (24A, ..., 24D) à l'essieu connectés respectivement aux essieux (14A, ..., 14C), la mesure de la densité de passagers à bord du véhicule par zone comprenant la mesure d'une charge supportée par l'essieu (14A, ..., 14C) par le capteur de charge (24A, ..., 24D) correspondant,
- contrôle de la caractéristique optique du rayonnement des sources lumineuses (20A, ..., 20G) d'un même groupe de sources lumineuses (21A, ..., 21H) en fonction de la densité de passagers mesurée pour la zone correspondante.

## Patentansprüche

1. Vorrichtung (18) zum Management des Lichts für ein Fahrzeug, insbesondere Schienenfahrzeug, das Fahrzeug umfassend mindestens einen Wagen (10), der sich hauptsächlich in einer Längsrichtung erstreckt und eine Vielzahl von Achsen (14A, ..., 14C) umfasst, die Vorrichtung (18) umfassend:
- eine Vielzahl von Sensoren zum Messen der Passagierdichte an Bord des Fahrzeugs, die geeignet sind, um eine Passagierdichte pro Bereich in dem Fahrzeug zu berechnen,
- eine Vielzahl von Lichtquellen (20A, ..., 20G), die in mindestens zwei Gruppen (21A, ..., 21H) von Lichtquellen gruppiert sind, wobei jede Gruppe mit einem jeweiligen Bereich des Fahrzeugs assoziiert ist und jede Quelle (20A, ..., 20G) einer gleichen Gruppe (21A, ..., 21H) von Quellen, die Lichtstrahlung emittieren, die gleiche optische Charakteristik aufweist,
- eine Steuereinheit (30), die mit jedem der Sensoren zum Messen der Passagierdichte und mit den Lichtquellen (20A, ..., 20G) verbunden ist, wobei die Steuereinheit (30) konfiguriert ist, um die optische Charakteristik der Strahlung der Lichtquellen (20A, ..., 20G) einer gleichen Gruppe von Lichtquellen (21A, ..., 21H) abhängig von der gemessenen Fahrgastdichte für den entsprechenden Bereich zu steuern, **dadurch gekennzeichnet, dass** die Vielzahl von Sensoren zum Messen der Passagierdichte durch eine Vielzahl von Lastsensoren (24A, ..., 24D) an der Achse gebildet ist, die jeweils mit den Achsen (14A, ..., 14C) verbunden werden sollen, wobei jeder Lastsensor (24A, ..., 24D) konfiguriert ist, um eine von der entsprechenden Achse (14A, ..., 14C) getragene Last zu messen.

2. Vorrichtung (18) nach Anspruch 1, wobei die Vorrichtung (18) mindestens einen zweiten Sensor (26, 28) umfasst, der ausgewählt ist aus einem Sensor (26) für Fahrzeugposition und/oder einer Uhr (28) wobei die Steuereinheit (30) konfiguriert ist, um eine erste Charakteristik der Lichtstrahlung abhängig von einer Messung des Sensors zum Messen der Passagierdichte an Bord des Fahrzeugs (24A, ..., 24D) und eine zweite Charakteristik der Lichtstrahlung abhängig von einer Messung des zweiten Sensors (26, 28) zu steuern.

3. Vorrichtung (18) nach Anspruch 1 oder 2, wobei die mindestens eine optische Charakteristik der Lichtstrahlung ausgewählt ist aus: der Wellenlänge der Lichtstrahlung, dem Lichtstrom der Lichtstrahlung, der Farbtemperatur der Lichtstrahlung.

4. Vorrichtung (18) nach einem der Ansprüche 1 bis 3, wobei der oder jeder Wagen (10) mindestens einen Fahrgastraum (12) umfasst, wobei die mindestens eine Lichtquelle dazu bestimmt ist, das Innere des mindestens einen Fahrgastraums (12) zu erhellen.

5. Vorrichtung (18) nach einem der Ansprüche 1 bis 4, wobei die Vorrichtung (18) einen Positionssensor (26) des Fahrzeugs umfasst, der konfiguriert ist, um zu erfassen, dass das Fahrzeug eine vorbestimmte Position erreicht, wobei die Steuereinheit (30) konfiguriert ist, um die mindestens eine optische Charakteristik der Strahlung der mindestens einen Lichtquelle (20A, ...., 20G) zu steuern, damit die mindestens eine Lichtquelle (20A, ..., 20G) eine Lichtstrahlung emittiert, deren mindestens eine optische Charakteristik einen vorbestimmten Wert aufweist, der mit der Position assoziiert ist.

6. Vorrichtung (18) nach einem der Ansprüche 1 bis 5, wobei die Vorrichtung (18) eine Uhr (28) umfasst, wobei die Uhr (28) einen Parameter bereitstellt, der für die Zeit repräsentativ ist, wobei die Steuereinheit (30) konfiguriert ist, um den Wert der mindestens einen optischen Charakteristik der Strahlung der mindestens einen Lichtquelle (20A, ...., 20G) abhängig von dem Parameter gemäß einer vorbestimmten zeitlichen Variationskurve des Werts zu ändern, wobei die zeitliche Variationskurve vorzugsweise für einen menschlichen zirkadianen Zyklus charakteristisch ist oder die Variationskurve eine Sinuskurve ist, die für die menschliche Atmung charakteristisch ist.

7. Fahrzeug, insbesondere Schienenfahrzeug, umfassend mindestens einen Wagen (10), wobei der mindestens eine Wagen (10) mindestens eine Achse (14A, ..., 14D) umfasst, das Fahrzeug ferner umfassend eine Vorrichtung (18) nach einem der Ansprüche 1 bis 6.

8. Verfahren zum Management des Lichts eines Fahrzeugs, insbesondere Schienenfahrzeugs, wobei das Fahrzeug mindestens einen Wagen (10) umfasst, der oder jeder Wagen (10) umfassend eine Vielzahl von Achsen (14A, ...., 14C), das Fahrzeug umfassend eine Vielzahl von Lichtquellen (20A, ..., 20G), die in mindestens zwei Gruppen (21A, ..., 21H) von Lichtquellen zusammengefasst sind, wobei jede Gruppe mit einem jeweiligen Bereich des Fahrzeugs assoziiert ist und jede Quelle (20A, ..., 20G) einer gleichen Gruppe (21A, ..., 21H) von Quellen, die Lichtstrahlung emittieren, die gleiche optische Charakteristik aufweist, das Verfahren umfassend die folgenden Schritte:
- messen einer Passagierdichte an Bord des Fahrzeugs nach Bereichen in dem Fahrzeug mit einer Vielzahl von Sensoren (24A, ..., 24D) zum Messen der Passagierdichte, wobei die Vielzahl von Sensoren zum Messen der Passagierdichte durch eine Vielzahl von Lastsensoren (24A, ...., 24D) an der Achse gebildet ist, die jeweils mit den Achsen (14A, ..., 14C) verbunden sind, wobei die zonenweise Messung der Passagierdichte an Bord des Fahrzeugs nach Bereichen die Messung einer von der Achse (14A, ..., 14C) getragenen Last durch den entsprechenden Lastsensor (24A, ..., 24D) umfasst,
- steuern der optischen Strahlungscharakteristik der Lichtquellen (20A, ..., 20G) einer gleichen Gruppe von Lichtquellen (21A, ..., 21H) abhängig von der gemessenen Passagierdichte für den entsprechenden Bereich.

## Claims

1. A light management device (18) for a vehicle, in particular a railway vehicle, the vehicle comprising at least one car (10) extending mainly in a longitudinal direction and comprising a plurality of axles (14, ... 14C), the device (18) comprising:
- a plurality of sensors for measuring the density of passengers on board the vehicle suitable for calculating a density of passengers per zone in the vehicle,
- a plurality of light sources (20A, ..., 20G) grouped into at least two groups (21A, ..., 21H) of light sources, each group being associated with a respective zone of the vehicle and each source (20A, ..., 20G) of a same group (21A, ..., 21H) of sources emitting light radiation with the same optical characteristic,
- a control unit (30) connected to each of the sensors for measuring the density of passengers, and to the light sources (20A, ..., 20G), the control unit (30) being configured to control the optical characteristic of the light radiation of the light sources (20A, ..., 20G) of a same group of light sources (21A, ..., 21H) based on the passenger density measured for the corresponding zone, **characterized in that**, the plurality of sensors for measuring the density of passengers is formed by a plurality of axle load sensors (24A, ..., 24D) intended to be respectively connected to the axles (14A, ..., 14C), each axle load sensor (24A, ..., 24D) being configured to measure a load carried by the corresponding axle (14A, ..., 14C).

2. The device (18) according to claim 1, wherein the device (18) comprises at least a second sensor (26, 28) selected from a sensor (26) of the position of the vehicle, and/or a clock (28), the control unit (30) being configured to monitor a first characteristic of the light radiation as a function of a measurement of the sensor for measuring the density of passengers on board the vehicle, and a second characteristic of the light radiation as a function of a measurement of the second sensor (26, 28).

3. The device (18) according to any one of claims 1 to 2, wherein the at least one optical characteristic of the light radiation is selected from: the wavelength of the light radiation, the luminous flux of the light radiation, the colour temperature of the light radiation.

4. The device (18) according to any one of claims 1 to 3, wherein the or each car (10) comprises at least one passenger compartment (12), the light sources being intended to illuminate the interior of the at least one passenger compartment (12).

5. The device (18) according to any one of the claims 1 to 4, wherein the device (18) comprises a vehicle position sensor (26) configured to detect that the vehicle has reached a predetermined position, the control unit (30) being configured to control the at least one optical characteristic of the radiation from the at least one light source (20A, ..., 20G) so that said at least one light source (20A, ..., 20G) emits light radiation whose at least one optical characteristic has a predetermined value associated with said position.

6. The device (18) according to any one of the claims 1 to 5, wherein the device (18) comprises a clock (28), the clock (28) providing a parameter representative of time, the control unit (30) being configured to vary the value of the at least one optical characteristic of the radiation of the at least one light source (20A, ..., 20G) as a function of said parameter according to a predetermined time variation curve of said value, the time variation curve preferably being characteristic of a human circadian cycle or the variation curve is a sine curve characteristic of human respiration.

7. A vehicle, in particular a railway vehicle, comprising at least one car, the at least one car comprising at least one axle (14A, ... , 14D), the vehicle further comprising a device (18) according to any of claims 1 to 6.

8. A method for managing the light of a vehicle, in particular a railway vehicle, the vehicle comprising at least one car (10), the or each car (10) comprising a plurality of axles (14, ... ,14C) , the vehicle comprising a plurality of light sources (20A, ..., 20G) grouped into at least two groups (21A, ..., 21H) of light sources, each group being associated with a respective zone of the vehicle and each source (20A, ... , 20G) of a same group (21A, ..., 21H) of sources emitting light radiation with the same optical characteristic, the method comprising the following steps:
- measuring a density of passengers aboard the vehicle per zone in the vehicle with a plurality of sensors for measuring the density of passengers, the plurality of sensors for measuring the density of passengers being formed by a plurality of axle load sensors (24A, ..., 24D) respectively connected to the axles (14A, ..., 14C), the density of passenger measurement aboard the vehicle comprising measuring the load carried by the corresponding axle (14A, ..., 14C) by the corresponding load sensor (24A, ... , 24D),
- controlling the optical characteristic of a light radiation of the light sources (20A, ..., 20G) of a same group of light sources (21A, ... , 21H) based on the density of passengers measured for the corresponding zone.
